# FASCICULE DE BREVET EUROPEEN

(11) **EP 0 498 710 B1**
(45) Date de publication et mention de la délivrance du brevet: **02.11.1994**
(21) Numéro de dépôt: 92400276.9
(22) Date de dépôt: 03.02.1992
(51) Int. Cl.: F16F 3/08, F16F 1/36, F16F 1/42, F16F 13/00

(54) **Support élastique à raideur variable**
Elastisches Lager mit wechselnder Steifheit
Variable-stiffness elastic support

(30) Priorité: 04.02.1991 FR 9101221
(43) Date de publication de la demande: 12.08.1992
(73) Titulaire: HUTCHINSON, F-75384 Paris Cédex 08 (FR)
(72) Inventeur: Simon, Jean-Michel, F-92140 Clamart France (FR)
(74) Mandataire: Picard, Jean-Claude Georges

(56) Documents cités:
- EP-A- 0 054 493
- EP-A- 0 324 693
- CH-A- 367 664
- DE-A- 3 744 348
- FR-A- 2 298 737
- FR-A- 2 340 834
- FR-A- 2 408 063
- FR-A- 2 636 696
- GB-A- 1 378 352
- US-A- 2 913 215

## Description

La présente invention concerne un support élastique à raideur variable, à savoir du type dont la courbe représentative de sa déformation en fonction des efforts de compression auxquels il est soumis présente deux zones traduisant une forte raideur, séparées par une zone traduisant une raideur notablement plus faible, ce support mettant en oeuvre, pour obtenir ce résultat, un effet de flambage de certains de ses éléments, intervenant à partir du moment où ledit effort atteint un certain niveau.

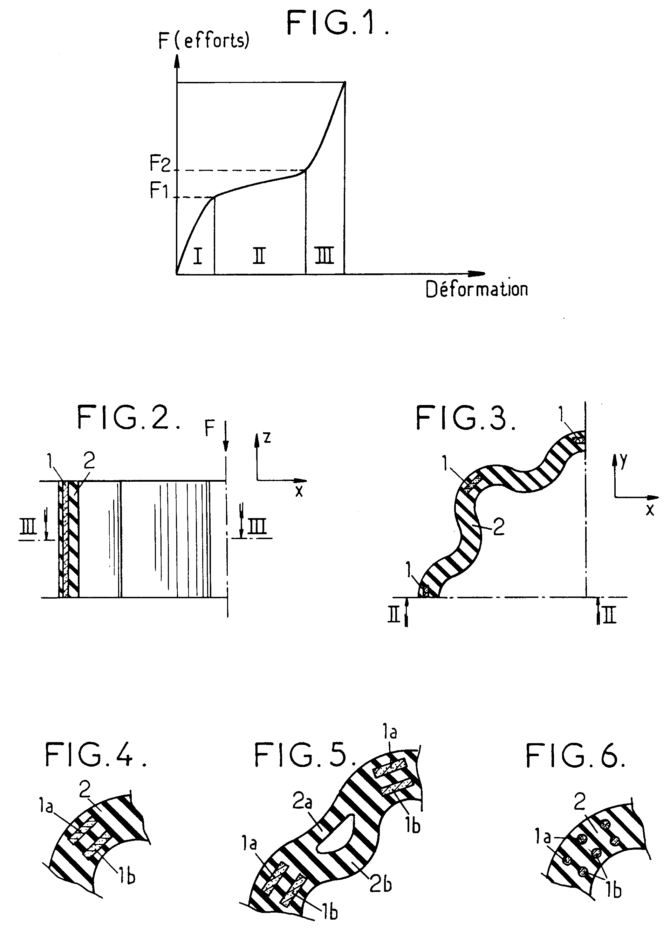

Une telle courbe représentative est montrée à la figure 1 des dessins ci-annexés. Les zones à forte raideur y sont désignées en I et III et la zone à raideur notablement plus faible en II. Le niveau d'effort à partir duquel la raideur doit considérablement diminuer est représenté en F1, et F2 désigne le niveau d'effort à partir duquel la raideur doit à nouveau être très élevée. Cette courbe est donnée évidemment à titre purement indicatif, étant bien entendu que son étendue et sa pente dans les différentes zones peuvent varier dans une large mesure.

Ce type de support élastique à raideur variable, ou de ressort non linéaire, peut être recherché dans un certain nombre d'applications, et par exemple dans les suspensions de moteurs ou de véhicules. La charge statique du moteur ou du véhicule est alors reprise dans la zone centrale II, de sorte que les vibrations du moteur ou des roues - selon le cas - sont très peu transmises au véhicule.

Les ressorts en question peuvent encore être intéressants dans les défenses, butoirs, pare-chocs et analogues, car ils peuvent alors absorber une énergie importante sans engendrer de réaction excessive sur le corps à protéger.

Comme on l'a indiqué plus haut, cette caractéristique particulière de ressort peut être obtenue par un flambage de certains éléments du support, ce flambage survenant dans des zones dites "faibles" d'une masse d'élastomère ou analogue. Cependant, ces supports sont très sensibles au fluage et présentent aussi l'inconvénient d'une trop faible raideur transversale. Pour combattre la tendance au déversement qui en résulte, on doit prévoir des systèmes de guidage latéral, tels qu'à biellettes, ce qui constitue une complication indésirable.

La demande de brevet britannique publiée n° 2 207 730 décrit quant à elle un support élastique en forme de tube conique en élastomère comportant, régulièrement étagés en direction axiale, des renforcements périphériques extérieurs se présentant soit sous la forme de nervures, soit sous la forme de cerclages métalliques. Ainsi, quand il est soumis à des efforts de compression axiaux croissants, ce support présente différentes zones de flambage entre ces renforcements, ce qui fait brutalement diminuer sa raideur. Toutefois, ce type de support est encore très sujet au fluage, et il est d'une fabrication compliquée.

Quant au brevet britannique n° 1 378 352, il décrit un support de suspension pour véhicule ferroviaire, qui peut être connecté aux parties à relier par des tiges dont la tête élargie est noyée dans une masse d'élastomère propre à se dilater dans la direction transversale aux efforts, et à soumettre ainsi des raidisseurs internes à des efforts de flexion, mais il ne peut y avoir avec un tel support aucun effet de flambage de ces raidisseurs.

Le but de la présente invention est de résoudre tous ces problèmes, et en particulier d'obtenir un support à rigidité variable du type général défini plus haut, qui soit peu sensible au fluage et qui ne présente pas ces complications d'ordre mécanique ou quant à sa fabrication.

A cet effet, un support élastique à raideur variable tel que défini au début sera, conformément à la présente invention, essentiellement caractérisé en ce que lesdits éléments destinés à flamber sont constitués par des poutres à forte rigidité dirigées sensiblement selon lesdits efforts de compression de sorte à recevoir lesdits efforts en bout, et qui sont noyées dans une matrice de matériau élastique propre à offrir, vis-à-vis des déformations latérales desdites poutres après flambage, une résistance élastique à caractéristique de forte rigidité, par son extension ou sa compression.

On conçoit ainsi qu'au début du chargement lesdites poutres chargées en bout, parallèlement (ou sensiblement parallèlement) à leur axe, présenteront une rigidité très élevée (zone I). Quand l'effort F atteint la valeur critique de flambage F1, les poutres flambent et présentent brusquement une rigidité très faible (sinon presque nulle) vis-à-vis de cet effort (pour toutes les valeurs supérieures à F1). A partir de la valeur d'effort F2, cependant, la matrice est fortement déformée latéralement, du fait de l'importante déformation desdites poutres, et donc est mise en extension (ou en compression), ce qui limite le flambage et permet à nouveau d'obtenir la forte raideur souhaitée pour le support (zone III). Il est à noter que la mise en tension ou en compression progressive de la matrice en matériau élastique permet d'obtenir un minimum de raideur pendant le flambage (zone III), ceci étant nécessaire à un positionnement correct de la suspension.

Avantageusement, lesdits éléments ou poutres à forte rigidité sont réalisés en un matériau composite du type comportant des fibres résistantes noyées dans une résine, ces fibres étant orientées préférentiellement parallèlement à l'axe de la poutre.

En utilisant par exemple des fibres de verre noyées dans une résine époxy ou analogue, on obtiendra des poutres susceptibles de subir de très fortes déformations latérales avant de rompre.

Quant à ce que l'on a appelé la matrice, elle pourra être constituée de tout matériau élastique approprié, par exemple du caoutchouc naturel ou synthétique. Ce matériau devra être souple et déformable, mais bien entendu suffisamment rigide pour assurer la cohésion de l'ensemble du support et sa fixation entre les parties rigides de la suspension. On pourra avantageusement conférer à cette matrice une forme générale cylindrique, dont les génératrices sont parallèles ou sensiblement parallèles à la direction desdits efforts de compression.

Par l'expression "sensiblement parallèle", on entend indiquer que le support pourra être légèrement conique, avec des poutres rigides par conséquent légèrement inclinées, pour favoriser leur flambage.

D'autres particularités et avantages de l'invention vont ressortir de la description qui suit de différents modes de réalisation, faite avec référence aux autres figures du dessin annexé dans lequel :
- la figure 2 est une vue en coupe axiale partielle, selon la ligne II-II de la figure 3, montrant le principe d'un support cylindrique conforme à l'invention ;
- la figure 3 est une vue en coupe transversale partielle de ce support schématique, par la ligne III-III de la figure 2 ;
- les figures 4 à 6 sont des vues en coupe transversale partielle montrant différentes variantes ;
- la figure 7 représente un autre mode de réalisation en coupe axiale selon la ligne VII-VII de la figure 8, la moitié droite de cette figure montrant les déformations lors d'un flambage des poutres vers l'extérieur, avec mise en tension de la surface extérieure de la matrice ;
- la figure 8 est une vue en coupe transversale du même support selon la ligne VIII-VIII de la figure 7;
- la figure 9 est une vue en coupe verticale d'un autre mode de réalisation du support, selon la ligne IX-IX de la figure 10 ;
- la figure 10 est une vue en coupe transversale du même support, selon la ligne X-X de la figure 9 ;
- la figure 11 montre un type de montage pour encore un autre support conforme à l'invention ;
- la figure 12 est une vue en coupe axiale d'un autre support conforme à l'invention, selon la ligne XII-XII de la figure 13 ;
- la figure 13 est une vue en coupe transversale du même support, selon la ligne XIII-XIII de la figure 12 ; et
- la figure 14 est une vue en coupe axiale d'encore un autre type de support conforme à l'invention, appliqué à la suspension d'un moteur.

Sur l'ensemble des figures, les éléments rigides ou poutres à forte rigidité, recevant en bout les efforts F de compression, dans la direction z en principe verticale, ont tous été référencés en 1 (éventuellement avec des indices), et la matrice de matériau élastique dans laquelle ces éléments ont été noyés, en 2 (éventuellement avec des indices). Les matériaux respectifs utilisés sont ceux qui ont été indiqués plus haut ou leurs équivalents (fibres de verre, carbone, etc., noyées dans une résine époxy, ou une autre matière thermodure ou thermoplastique pour les poutres 1 ; élastomère, TPE, etc. pour la matrice 2). Il est à noter que pour ce qui concerne cette matrice, on choisira de préférence son matériau constitutif ou plusieurs qualités différentes de celui-ci en fonction de la raideur et de l'amortissement que l'on désirera conférer au support en fonction de sa déformation.

Dans le mode de réalisation des figures 2 et 3, la matrice ou enveloppe 2 en caoutchouc ou analogue est conçue de telle sorte que lors du flambage des poutres composites 1, leur déformation latérale provoque une mise en tension périphérique de cette enveloppe.

Les figures 4 et 5 montrent la possibilité de concevoir les poutres 1a et 1b, noyées dans la matrice 2, comme disposées en sandwich deux par deux ou en plus grand nombre, avec intercalation à chaque fois du caoutchouc de la matrice. Sur la figure 5 on a montré en outre la possibilité d'obtenir plusieurs niveaux de raidissement par mises en tension successives des branches 2a et 2b de la matrice lors du flambage des poutres 1a, 1b.

A la figure 6, on a représenté des rangées 1a et 1b de poutres en forme de joncs à grande raideur et constituées d'un composite analogue à celui qui a été défini plus haut, enrobé dans du caoutchouc.

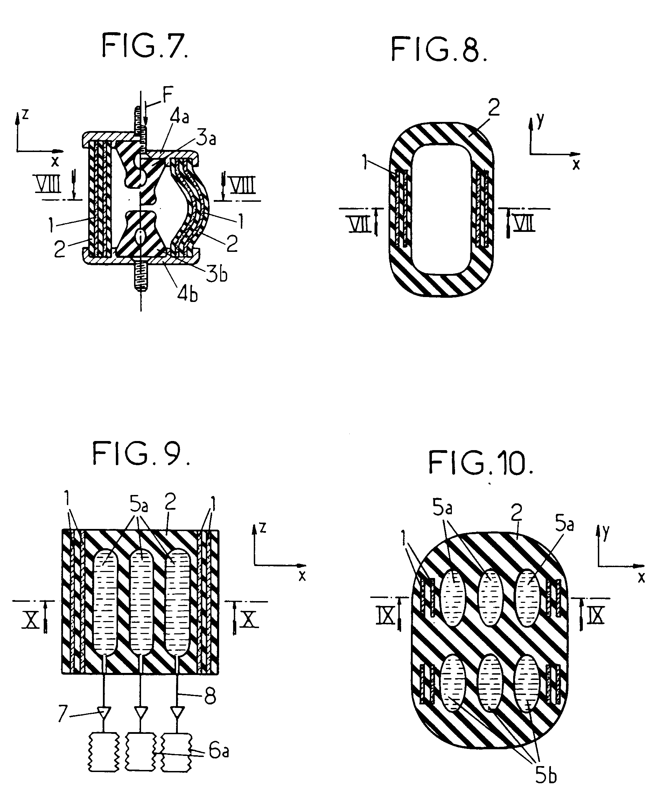

La figure 8 montre la possibilité de donner aux poutres 1 une certaine étendue dans la direction transversale des y (perpendiculaire à la direction supposée verticale z des efforts de compression, et à l'autre direction horizontale x) ; de la sorte, par ces poutres lamellaires, on rigidifie le support dans cette direction y, ce qui lui confère la tenue latérale voulue.

La figure 7 représentant le même support montre la possibilité supplémentaire de prévoir intérieurement des butées de compression 3a, 3b permettant d'obtenir une progressivité de la raideur après flambage des poutres. Ces butées sont montées sur des plaques de montage 4a et 4b rainurées intérieurement de sorte à recevoir et à maintenir les extrémités respectives du support proprement dit.

Les figures 9 et 10 montrent un support dont la matrice 2 en élastomère ou analogue comporte intérieurement des alvéoles 5a et 5b. Il s'agit d'un support conçu pour que le flambage des poutres 1 se produise vers l'intérieur (et non pas vers l'extérieur comme dans les cas précédents), de sorte à mettre progressivement en compression la matrice 2 alvéolée (et non pas en extension comme dans les cas précédents).

Ces alvéoles 5a et 5b peuvent être mis en pression par un fluide, ce qui permet, à la demande, d'ajuster la raideur du support et/ou la hauteur ou assiette de l'élément supporté.

Sur la figure 9 on a même montré la possibilité de faire communiquer les alvéoles 5a (et également 5b) avec des cavités souples 6a, ce qui permet un transfert de liquide dans les deux sens entre alvéoles et cavités quand le support se déforme. Des clapets 7 de laminage du liquide, placés sur les conduites 8 entre cavités 6a et alvéoles 5a, permettent ainsi d'obtenir l'amortissement souhaité, symétrique ou éventuellement dissymétrique en traction et en compression.

Grâce au montage des figures 9 et 10, on peut également établir une dissymétrie des effets amortisseurs entre les alvéoles 5a et 5b. On peut par exemple rendre l'amortissement en traction procuré par les alvéoles 5b beaucoup plus important que celui qui est procuré par les alvéoles 5a. Cela aura pour effet de limiter considérablement le déversement du support dans le sens des y positifs (cf. figure 10) sous l'effet d'une charge dynamique s'exerçant sur le support dans ce sens (le retour du support à sa forme initiale sera beaucoup plus rapide au niveau des alvéoles 5a qu'au niveau des alvéoles 5b).

On peut encore, grâce au montage des figures 9 et 10, mettre en oeuvre un effet de colonne d'inertie dans les conduites de liquide 8 entre les alvéoles du support et les cavités extérieures. Une résonance entre alvéoles et cavités à une fréquence déterminée permettra en effet d'obtenir un fort amortissement dans une certaine plage de fréquences.

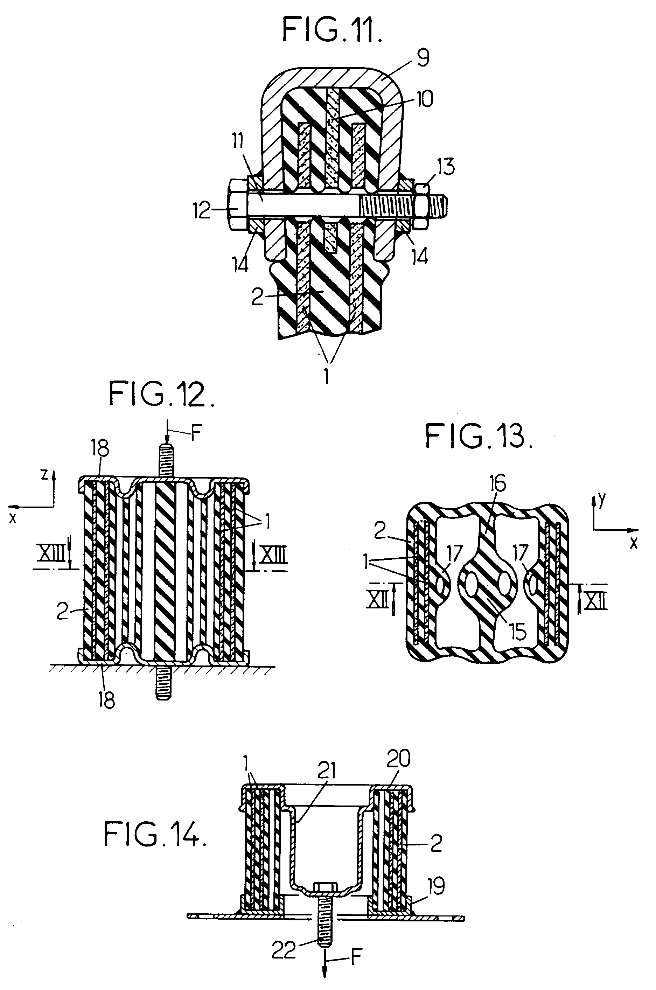

Le mode de réalisation de la figure 11 montre un mode de montage du support.

L'armature en U référencée en 9 est sertie sur l'élastomère de la matrice, une plaque intercalaire 10 étant destinée à limiter le fluage dû à la compression transversale. L'axe traversant ou boulon 11 assure le serrage de l'ensemble entre sa tête 12 et un écrou 13, avec interposition de rondelles soudées 14. Ce boulon peut reprendre ainsi les efforts de traction en servant de butée à l'élastomère 2 et aux poutres composites 1.

Les figures 12 et 13 montrent encore un support élastique conforme à l'invention, du type conçu pour que les poutres rigides 1 flambent vers l'intérieur, une butée étant alors fournie par le bourrelet 15 d'une âme centrale 16 de la matrice en élastomère 2 et les bourrelets 17 des parois latérales dans lesquelles sont incluses les poutres 1. Dans ce mode de réalisation, comme dans celui des figures 7 et 8, on voit que la matrice 2 est tubulaire et peut être fabriquée à bon marché et en grandes quantités par extrusion, avec les poutres incorporées. Il suffit ensuite de tronçonner et de monter ces tronçons entre des plaques de fixation telles que celles qui ont été représentées en 18.

La figure 14 montre encore un support élastique conforme à l'invention et dont la matrice 2 en élastomère ou analogue est constituée d'un tronçon de tube extrudable. Ce tronçon est maintenu entre une plaque de fond 19 à gorge périphérique, et une armature coiffante de dessus 20 dont le fût central pénétrant 21 supporte un boulon 22 de suspension de moteur ou analogue et peut servir de butée à l'élastomère 2 lors du flambage des poutres vers l'intérieur.

On voit bien que dans tous ses modes de réalisation, un support élastique conforme à l'invention présente, dans une plage déterminée de charges, une très faible rigidité sans pour autant être sujet au fluage ; en effet, cette faible rigidité est due au flambage de poutres qui sont cependant, de par leur constitution, extrêmement rigides vis-à-vis des efforts s'exerçant en bout et elles-mêmes peu sujettes au fluage.

L'invention pourra donc trouver des applications très intéressantes dans tous les domaines de la technique où ces qualités sont requises, et notamment dans les supports antivibratoires pour l'industrie ou pour l'automobile : pour les moteurs et même dans la suspension primaire des véhicules, de même que dans les butées de choc.

La fabrication des supports élastiques présentera aussi l'avantage d'être très peu coûteuse, les matrices en élastomère pouvant être fabriquées en grandes séries par extrusion avec, le cas échéant, des butées intégrées.

## Revendications

1. Support élastique à raideur variable , à savoir du type dont la courbe représentative de sa déformation en fonction des efforts de compression auxquels il est soumis présente deux zones (I, III) traduisant une forte raideur, séparées par une zone (II) traduisant une raideur notablement plus faible, ce support mettant en oeuvre, pour obtenir ce résultat, un effet de flambage de certains de ses éléments, intervenant à partir du moment où ledit effort atteint un certain niveau (F1), caractérisé en ce que lesdits éléments sont constitués par des poutres (1) à forte rigidité dirigées sensiblement selon lesdits efforts (F) de compression de sorte à recevoir lesdits efforts en bout, et qui sont noyées dans une matrice (2) de matériau élastique propre à offrir, vis-à-vis des déformations latérales desdites poutres (1) après flambage, une résistance élastique à caractéristique de forte rigidité, par son extension ou sa compression.

2. Support selon la revendication 1, caractérisé en ce que lesdits éléments ou poutres (1) à forte rigidité sont réalisés en un matériau composite du type comportant des fibres résistantes noyées dans une résine, ces fibres étant orientées préférentiellement parallèlement à l'axe de la poutre.

3. Support selon la revendication 1 ou 2, caractérisé en ce que ladite matrice (2) est réalisée en caoutchouc naturel ou synthétique, et possède une forme générale cylindrique, dont les génératrices sont parallèles ou sensiblement parallèles à la direction desdits efforts (F) de compression.

4. Support selon la revendication 3, caractérisé en ce que ladite matrice (2) est constituée par un tronçon obtenu à partir d'une masse de matériau élastique extrudée incorporant les poutres.

5. Support selon la revendication 3 ou 4, caractérisé en ce que ladite matrice (2) comporte intérieurement des bourrelets (15, 17) servant mutuellement de butées lors d'un flambage desdites poutres (1) vers l'intérieur, pour limiter la déformation de ces poutres.

6. Support selon l'une quelconque des revendications 1 à 4, caractérisé en ce que ladite matrice (2) est maintenue entre une plaque de fond (19) et une armature (20) présentant un fût central (21) servant de butée à ladite matrice lors du flambage des poutres (1) vers l'intérieur.

7. Support selon l'une quelconque des revendications précédentes, caractérisé en ce qu'il comporte des butées de compression (3a, 3b) permettant d'obtenir une progressivité de la raideur après flambage des poutres, ces butées étant fixées intérieurement sur des plaques de montage (4a, 4b).

8. Support selon l'une quelconque des revendications 1 à 3, caractérisé en ce que ladite matrice (2) comporte intérieurement des alvéoles (5a, 5b) pouvant être mis en pression par un fluide, ce qui permet d'ajuster la raideur du support et d'effectuer un réglage d'assiette.

9. Support selon l'une quelconque des revendications 1 à 3, caractérisé en ce que ladite matrice (2) comporte des alvéoles (5a, 5b) propres à être emplis d'un liquide et à être mis en communication avec des cavités extérieures (6a) par des conduites (8) pourvues de clapets (7) de laminage dudit liquide.

10. Support selon la revendication 9, caractérisé par la mise en oeuvre d'un effet de colonne pour l'obtention d'une résonance entre alvéoles et cavités à une fréquence déterminée.

11. Support selon l'une quelconque des revendications précédentes, caractérisé en ce que lesdites poutres (1) sont accouplées en sandwich, avec intercalation dudit matériau élastique (2).

## Claims

1. Variable-stiffness elastic support, namely of the type where the curve representing its deformation as a function of the compression forces to which it is subjected has two zones (I, III) exhibiting high stiffness, separated by a zone (II) exhibiting appreciably lower stiffness, this support using, in order to obtain this result, a buckling effect for some of its components, occurring from the moment when the said force reaches a certain level (F1), characterised essentially in that the said members consist of high-rigidity beams (1) lying in substantially the same direction as the said compression forces (F) so as to receive the said forces end on, and which are embedded in a matrix (2) of elastic material able to offer, with respect to lateral deformations of the said beams (1) after buckling, an elastic strength with a characteristic of high rigidity, through its extension or compression.

2. Support according to Claim 1, characterised in that the said high-rigidity members or beams (1) are produced from a composite material of the type including strong fibres embedded in a resin, these fibres preferably being oriented parallel to the axis of the beam.

3. Support according to Claim 1 or 2, characterised in that the said matrix (2) is produced from natural or synthetic rubber, and has a cylindrical shape overall, the generatrices of which are parallel or substantially parallel to the direction of the said compression forces (F).

4. Support according to Claim 3, characterised in that the said matrix (2) consists of a length obtained from a mass of extruded elastic material incorporating the beams.

5. Support according to Claim 3 or 4, characterised in that the said matrix (2) has enlargements (15, 17) on the inside serving mutually as stops when the said beams (1) buckle inwards, in order to limit the deformation of these beams.

6. Support according to any one of Claims 1 to 4, characterised in that the said matrix (2) is held between a base plate (19) and a frame (20) having a central barrel (21) serving as a stop for the said matrix when the beams (1) buckle inwards.

7. Support according to any one of the preceding claims, characterised in that it has compression stops (3a, 3b) making it possible to obtain progressive stiffening after buckling of the beams, these stops being fixed internally to mounting plates (4a, 4b).

8. Support according to any one of Claims 1 to 3, characterised in that the said matrix (2) has cells (5a, 5b) on the inside which can be pressurised by a fluid, which makes it possible to adjust the stiffness of the support and to adjust the angle.

9. Support according to any one of Claims 1 to 3, characterised in that the said matrix (2) has cells (5a, 5b) suitable for being filled with a liquid and being connected to external cavities (6a) by pipes (8) with valves (7) for throttling the said liquid.

10. Support according to Claim 9, characterised by the use of a column effect for obtaining resonance between cells and cavities at a given frequency.

11. Support according to any one of the preceding claims, characterised in that the said beams (1) are coupled together in a sandwich with the interposing of the said elastic material (2).

## Patentansprüche

1. Elastisches Lager mit sich ändernder Steifigkeit der Art, bei dem die Kurve, die die Abhängigkeit seiner Verformung als Funktion der Druckbelastungen wiedergibt, denen das Lager unterworfen ist, zwei Zonen (I , III) mit hoher Steifigkeit aufweist, die durch eine Zone (II) voneinander getrennt sind, die eine beträchtlich geringere Steifigkeit hat, wobei das Lager, um dieses Ergebnis zu erhalten, einen Knickeffekt bestimmter Elemente benutzt, der von dem Augenblick an auftritt, an dem die Belastungen einen bestimmten Wert (F₁) erreichen, dadurch gekennzeichnet, daß die Elemente aus Trägern (1) mit hoher Steifigkeit bestehen, die im wesentlichen in Richtung der Druckbelastungen (F) ausgerichtet sind, derart, daß sie diese Belastungen endseitig aufnehmen, und die in eine Matrix (2) aus elastischem Material eingebettet sind, die gegenüber seitlichen Deformationen der Träger (1) nach dem Knicken einen elastischen Widerstand mit hoher Steifigkeitskennlinie durch Ausdehnung und Kompression aufweisen kann.

2. Flachlager nach Anspruch 1, dadurch gekennzeichnet, daß die Elemente oder Träger (1) mit hoher Steifigkeit aus einem zusammengesetzten Material aus widerstandsfähigen Fasern bestehen, die in ein Harz eingebettet sind, wobei die Fasern vorzugsweise parallel zur Achse des Armes ausgerichtet sind.

3. Flachlager nach den Ansprüchen 1 oder 2, dadurch gekennzeichnet, daß die Matrix (2) aus natürlichem oder künstlichem Kautschuk besteht und eine allgemein zylindrische Form aufweist, deren Erzeugende parallel oder im wesentlichen parallel zur Richtung der Druckbelastung (F) verlaufen.

4. Flachlager nach Anspruch 3, dadurch gekennzeichnet, daß die Matrix (2) aus einem Abschnitt besteht, der aus einer Masse aus elastischem extrudierten Material, die die Träger einschließt, erhalten wird.

5. Flachlager nach den Ansprüchen 3 oder 4, dadurch gekennzeichnet, daß die Matrix (2) in ihrem Inneren Wulste (15, 17) enthält, die gegenseitig als Anschläge während des Knickens der Träger (1) nach innen dienen, um die Verformung dieser Träger zu begrenzen.

6. Flachlager nach einem der vorhergehenden Ansprüche 1 bis 4, dadurch gekennzeichnet, daß die Matrix (2) zwischen einer Bodenplatte (19) und einer Armatur (20), mit einer mittleren Hülse (21) gehalten wird, die als Anschlag für die Matrix während des Abknickens der Träger (1) nach innen dient.

7. Flachlager nach einem der vorhergehenden Ansprüche, dadurch gekennzeichnet, daß es Druckanschläge (3a, 3b) enthält, die eine Progressivität der Steifigkeit nach dem Abknicken der Träger ermöglichen, wobei die Anschläge innen an Befestigungsplatten (4a, 4b) angebracht sind.

8. Flachlager nach einem der Ansprüche 1 bis 3, dadurch gekennzeichnet, daß die Matrix (2) im Inneren Zellen (5a, 5b) enthält, die mittels eines Mediums unter Druck gesetzt werden können, wodurch es möglich ist, die Steifigkeit des Lagers einzustellen und eine Regelung der Anordnung zu bewirken.

9. Lager nach einem der vorhergehenden Ansprüche 1 bis 3, dadurch gekennzeichnet, daß die Matrix (2) Zellen (5a, 5b) enthält, die mit einer Flüssigkeit gefüllt und mit äußeren Hohlräumen (6a) über Leitungen (8) in Verbindung gebracht werden können, die mit Drosselventilen (7) für den Durchfluß der Flüssigkeit versehen sind.

10. Flachlager nach Anspruch 9, gekennzeichnet durch die Anwendung eines Kolonneneffektes zum Erreichen einer Resonanz zwischen Zellen und Hohlräumen bei einer bestimmten Frequenz.

11. Flachlager nach einem der vorhergehenden Ansprüche, dadurch gekennzeichnet, daß die Träger (1) sandwichartig unter Einlagern des elastischen Materials (2) zusammengefügt sind.
